# EUROPÄISCHE PATENTANMELDUNG

(11) **EP 1 503 188 A1**
(43) Veröffentlichungstag der Anmeldung: **02.02.2005**
(21) Anmeldenummer: 04017419.5
(22) Anmeldetag: 23.07.2004
(51) Int. Cl.: G01F 11/02, G01F 11/04

(54) **Vorrichtung zum volumetrischen Dosieren einer Flüssigkeit sowie Verwendung der Vorrichtung**

(30) Priorität: 24.07.2003 DE 20311427 U
(71) Anmelder: Dietrich, Frédéric F., 1801 Le Mont Pelerin (CH)
(72) Erfinder: Dietrich, Frédéric F., 1801 Le Mont Pelerin (CH)
(74) Vertreter: Hiebsch, Gerhard F., Dipl.-Ing.

(57) **Zusammenfassung**

Bei einer Vorrichtung (10) mit zumindest einem Dosierzylinder (24) zum volumetrischen Dosieren einer Flüssigkeit, ist in diesem ein durch einen Kraftspeicher (40) bewegbarer Kolben (38) zur Veränderung des Volumens des Zylinderraumes für das Ansaugen der Flüssigkeit aus einem Ausgangsbehälter (12) bzw. das Austragen der Flüssigkeit in einen Aufnahmebehälter (22) angeordnet. Zwischen dem Kolben (38) und der Zylinderwandung sind am Kolben (38) angebrachte Dichtungsringe angeordnet. Der Kraftspeicher zum Ansaugen bzw. zum Ausstoßen der zu dosierenden Flüssigkeit in dem oder aus dem Dosierzylinder (24) ist als Druckfeder (40) ausgebildet, kann aber auch als Zugfeder ausgebildet sein, die dann an der der zu dosierenden Flüssigkeit fernliegenden Oberfläche des Kolbens (38) angeordnet ist.

## Beschreibung

Die Erfindung betrifft eine Vorrichtung mit zumindest einem Dosierzylinder zum volumetrischen Dosieren einer Flüssigkeit. Zudem umfasst die Erfindung die Verwendung der Vorrichtung.

Bei bislang bekannten Verfahren und Vorrichtungen zum Dosieren von Flüssigkeiten -- beispielsweise nach CH-A 649 630, CH-A 642 744 oder EP-A-0 421 940 -- treten Schwierigkeiten auf. Beim Dosieren von leicht verdampfenden Produkten -- wie etwa Alkoholen -- mit dem Stande der Technik zugehörigen Vorrichtungen entstehen mehr Probleme als beim Arbeiten mit schwerer verdampfenden Produkten wie Wasser oder Öl. Als erhebliches Problem hat sich auch der Einsatz frei schwimmender Kolben herausgestellt, da das Verkanten in hochviskosen Flüssigkeiten ohne weiteres möglich ist.

Angesichts dieser Gegebenheiten hat sich der Erfinder das Ziel gesetzt, den Stand der Technik dahingehend zu verbessern, dass auch leicht verdampfende Produkte einen Dosiervorgang ohne Probleme unterzogen werden können.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Bemessungsbereichen sollen auch innerhalb der genannten Grenzen liegende Werte als Grenzwerte offenbart und beliebig einsetzbar sein.

Erfindungsgemäß ist in dem Dosierzylinder ein durch einen Kraftspeicher bewegbarer Kolben zur Veränderung des Volumens des Zylinderraumes für das Ansaugen der Flüssigkeit aus einem Ausgangsbehälter bzw. das Austragen der Flüssigkeit in einen Aufnahmebehälter angeordnet. Dazu hat es sich als günstig erwiesen, den Kraftspeicher zum Ansaugen bzw. zum Ausstoßen der zu dosierenden Flüssigkeit in den oder aus dem Dosierzylinder entweder als Druckfeder auszubilden oder als Zugfeder; die Zugfeder soll bevorzugt an der der zu dosierenden Flüssigkeit fernliegenden Oberfläche des Kolbens angeordnet werden, also im trockenen Bereich des Zylinderraumes, der das Strömungsmittel für die Kolbenbewegung aufnimmt. Um diesen Kopfraum gegen die Flüssigkeit abzuschirmen, sollen zwischen dem Kolben und der Zylinderwandung am Kolben angebrachte Dichtungsringe angeordnet sein. Außer letzteren weist der Kolben auch noch zumindest einen einstellbaren Volumenregler auf.

Es liegt im Rahmen der Erfindung, dass der Werkstoff der Druckfeder bzw. der Zugfeder mit einem korrosionsfesten Überzug aus Kunststoff - insbesondere aus PVD - ummantelt ist, und/oder die Federn sollen aus nicht rostendem Stahl, insbesondere aus Edelstahl, geformt sein.

Es sind mehrere Zuordnungsvarianten denkbar. So kann zumindest zwei Ausgangsbehältern jeweils wenigstens ein Dosierzylinder zugeordnet sein oder aber zumindest zwei Ausgangsbehältern jeweils wenigstens zwei Dosierzylinder unterschiedlichen Volumens.

Von Bedeutung ist die Wahl des Dosiervolumens der/des Dosierzylinders, das erfindungsgemäß 0,1 bis 5.000 cm³, insbesondere 1 bis 4.000 cm³, messen soll. Bevorzugt werden dabei Dosiervolumina von 100 bis 2.000 cm³, vorzugsweise von 10 bis 1.000 cm³, oder von 1 bis 200 cm³, vorzugsweise von 10 bis 100 cm³. Denkbar ist auch ein Dosiervolumen von 0,1 bis 20 cm³, vorzugsweise von 1 bis 10 cm³.

Von besonderer Bedeutung ist, dass den Dosierzylinder der Vorrichtung eine Förderleitung mit dem Ausgangsbehälter unter Zwischenschaltung eines Rückschlagventils verbindet, und dass von der Förderleitung eine Zweigleitung mit Rückschlagventil ausgeht, die andernends dem Aufnahmebehälter zugeordnet ist, also bei Druckumkehr die voluminierte Flüssigkeit jenem Aufnahmebehälter zuströmen lässt.

An der jener Förderleitung fernliegenden -- zum Kopfraum weisenden -- Stirnseite des Kolbens der Vorrichtung soll in deren Dosierzylinder eine Druckleitung münden, die mit einem Strömungsmittel gefüllt zu werden vermag; letzteres steuert die Kolbenbewegung.

Im Rahmen der Erfindung liegt auch eine Anlage aus zumindest zwei der beschriebenen Vorrichtungen, deren Druckleitungen nahe dem Drucklufteinlass zusammengeführt sind; die Druckleitung jeder Vorrichtung soll durch eine Axialleitung mit ihrer Zweigleitung verbunden sein und die Axialleitung einen Dosierzylinder enthalten.

Dazu hat es sich als günstig erwiesen, das Volumen des Dosierzylinders der Axialleitung geringer zu halten als das Volumen des der Förderleitung zugeordneten Dosierzylinders.

Die in der Zeichnung und den Ansprüchen beschriebene Vorrichtung mit einem eine Druckfeder oder eine Zugfeder enthaltendem Dosierzylinder oder die Anlage aus mehreren Dosierzylindern soll zum Dosieren von Flüssigkeiten in der chemischen Industrie oder in der Farb- und Lackindustrie eingesetzt werden. Gleichermaßen ist sie zum Dosieren von Flüssigkeiten in der pharmazeutischen Industrie oder in der Lebensmittelindustrie geeignet, vor allem in der Getränkeindustrie.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

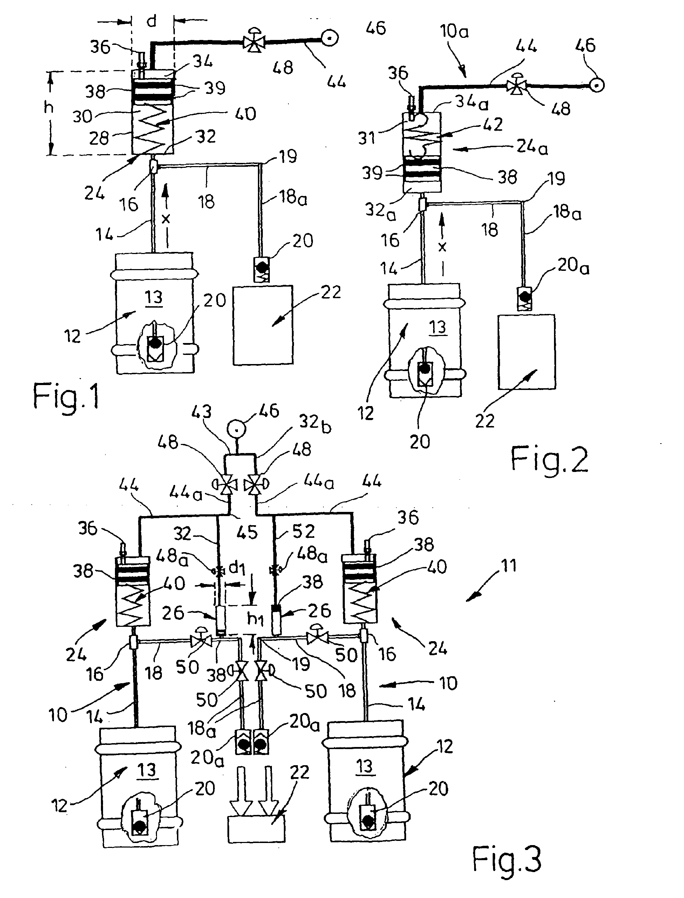

- Fig. 1 bis 3:: jeweils eine teilweise geschnittene Seitenansicht von drei Ausgestaltungen einer erfindungsgemäßen Vorrichtung.

Eine erfindungsgemäße Vorrichtung 10 zum volumetrischen Dosieren von Flüssigkeiten als Fördergut weist gemäß Fig. 1 einen Ausgangsbehälter 12 für zu dosierendes Fördergut auf, der mittels einer firstwärts aufragenden Förderleitung 14 an einen Dosierzylinder 24 angeschlossen ist; diese Förderleitung 14 endet im Ausgangsbehälter 12 an einem Rückschlagventil 20; dessen Lage ist dank eines zeichnerischen Durchbruchs in der Behälterwandung 13 sichtbar. Unterhalb des Dosierzylinders 24 einer Höhe h sowie eines Außendurchmessers d geht von der Förderleitung 14 an einem in diese integrierten Zweigstück 16 eine Zweigleitung 18 ab, die zu der in Fig. 1 vertikalen Förderleitung 14 rechtwinkelig verläuft und an einem Knie 19 in einen vertikalen Leitungsabschnitt 18ₐ übergeht; dieser endet unter Zwischenschaltung eines weiteren Rückschlagventils 20ₐ -- in einem Aufnahmebehälter 22 für dosiertes Fördergut.

Innerhalb der Zylinderwandung 28 des Dosierzylinders 24 erstreckt sich zwischen Zylinderboden 32 und einem relativ zu diesem bewegbaren Kolben 38 eine Druckfeder 40. Die von jener Zylinderwandung 28 vorgegebene Bewegungsbahn des Kolbens 38 wird nach oben hin durch einen scheibenartigen Zylinderdeckel 34 begrenzt, in dem ein Volumenregler 36 angeordnet ist. Im Zylinderdeckel 34 bzw. in einem sich zwischen diesem sowie der zugeordneten Kolbenoberfläche erstreckenden Kopfraum 31 mündet -- hier axial --- eine Druckleitung 44, die den Zylinderraum 30 mit einem Gasoder Drucklufteinlass 46 verbindet sowie ein Dreiwegeventil 48 enthält.

In dem Dosierzylinder 24 wird der zur Zylinderwandung 28 mit O-Ringen 39 abgedichtete Kolben 38 durch die Druckfeder 40 in einer oberen Ausgangsstellung -- als Nullstellung -gehalten. Diese Nullstellung kann über den Volumenregler 36 verändert werden, wodurch das Volumen auf der Ansaugseite nach Wahl verkleinert oder vergrößert wird. Nach dem Einstellen des Volumens über den Volumenregler 36 wird über das Dreiwegeventil 48 der Druckleitung 44 der Drucklufteinlass 46 geöffnet und durch das Strömungsmittel der Kolben 38 gegen die Kraft der Druckfeder 40 zum Zylinderboden 32 hin bewegt. Wird nun am Dreiwegeventil 48 die Druckluftzufuhr unterbrochen, gleitet der Kolben 38 durch jene Kraft der Druckfeder 40 in die Ausgangsstellung zurück und saugt dabei das zu dosierende Produkt in vorgegebener Menge durch das Rückschlagventil 20 in Förderrichtung x an; in Fig. 1, 2 ist das Rückschlagventil 20 des Ausgangsbehälters 12 in geöffnetem Zustand skizziert. Beim erneuten Öffnen des Dreiwegeventils 48 wird das durch das Volumen definierte Produkt bei geschlossenem Rückschlagventil 20 der Förderleitung 14 durch das Rückschlagventil 20ₐ der Zweigleitung 18, 18ₐ in den Aufnahmebehälter 22 abgegeben.

Soll das Produkt von einer Feder nicht berührt werden, wird gemäß Fig. 2 statt der aus nicht rostendem Stahl -- vor allem aus Edelstahl -- gefertigten Druckfeder 40 in einem Dosierzylinder 24ₐ eine Rückholfeder 42 aus entsprechendem Werkstoff eingesetzt, die sich zwischen der Deckelplatte 34ₐ des Dosierzylinders 24ₐ und der Firstfläche des Kolbens 38 erstreckt. Die Rückholfeder 42 -- wie auch die Druckfeder 40 -- kann auch mit einem korrosionsfesten Überzug aus Kunststoff, etwa aus PVD, ummantelt sein.

Beim Beispiel der Fig. 2 ist der Zylinderboden 32ₐ entsprechend dem Zylinderdeckel 34 nach Fig. 1 ausgestaltet, und die Deckelplatte 34ₐ ist -- wie in Fig. 1 der Zylinderboden 32 -- an die Zylinderwandung 28 angeschlossen. Die Dimension des Dosierzylinders 24, 24ₐ kann -- in Abhängigkeit vom Einsatzgebiet -- zwischen 0,1 cm³ und 500 cm³ liegen.

Fig. 3 zeigt eine Anlage 11 aus zwei der oben beschriebenen Vorrichtungen 10. Deren beide Zweigleitungen 18 -- die hier jeweils nahe dem Leitungsknie 19 ein Zweiwegeventil 50 enthalten -- fluchten miteinander. Ihre vertikalen Abschnitte 18ₐ, welche ebenfalls jeweils mit einem Zweiwegeventil 50 nahe dem Leitungsknie 19 versehen sind, verlaufen oberhalb eines gemeinsamen Aufnahmebehälters 22 parallel nebeneinander. Zwischen dem Zweiwegeventil 50 jener horizontalen Zweigleitung 18 und dem Leitungsknie 19 ist ein weiterer -einen Kolben 38 enthaltender -- Dosierzylinder 26 kleineren Durchmessers d₁ und geringerer Höhe h₁ angeordnet, den firstwärts eine -- ihrerseits ein Dreiwegeventil 48ₐ enthaltende -- Axialleitung 52 mit der Druckleitung 44 verbindet; in letztere mündet die Axialleitung 52 vor deren Dreiwegeventil 48, das oberhalb eines Knies 45 in einem Vertikalabschnitt 44ₐ der Druckleitung 44 vorgesehen ist. Die beiden Vertikalabschnitte 44ₐ sind nahe dem Gas- bzw. Drucklufteinlass 46 miteinander durch ein horizontales Verbindungsstück 43 verbunden.

### Beispiel I

Bei Verwendung von mehreren Dosierzylindern 24, 26 und unterschiedlichen Zylindergrößen können die Produkte durch mehrere nacheinander durchgeführte Dosiervorgänge genau dosiert werden, wobei eine Hauptdosis und mehrere kleine Dosen in den Aufnahmebehälter 22 abgegeben werden, beispielsweise

| | | |
|---|---|---|
| Hauptdosis | 7 x 250 g = | 1750 g |
| Dosis A | 10 x 10 g = | 100 g |
| Dosis B | 6 x 1 g = | 6 g |
| | | 1856 g |

Je nach der Auswahl von Anzahl und Volumina der Zylinder 24, 26 kann jedes Volumen in jeder Größe dosiert werden. Durch den Aufbau bedingt, vermag diese Dosierung auch unter inerter Atmosphäre oder unter Schutzgas durchgeführt zu werden.

## Patentansprüche

1. Vorrichtung mit zumindest einem Dosierzylinder zum volumetrischen Dosieren einer Flüssigkeit,
**dadurch gekennzeichnet,**
**dass** in dem Dosierzylinder (24, 26) ein durch einen Kraftspeicher (40, 42) bewegbarer Kolben (38) zur Veränderung des Volumens des Zylinderraumes (30) für das Ansaugen der Flüssigkeit aus einem Ausgangsbehälter (12) bzw. das Austragen der Flüssigkeit in einen Aufnahmebehälter (22) angeordnet ist.

2. Vorrichtung nach Anspruch 1, **dadurch gekennzeichnet, dass** der Kraftspeicher zum Ansaugen bzw. zum Ausstoßen der zu dosierenden Flüssigkeit in dem oder aus dem Dosierzylinder (24) als Druckfeder (40) ausgebildet ist (Fig. 1).

3. Vorrichtung nach Anspruch 1, **dadurch gekennzeichnet, dass** der Kraftspeicher zum Ansaugen bzw. zum Ausstoßen der zu dosierenden Flüssigkeit in dem bzw. aus dem Dosierzylinder (24ₐ) als Zugfeder (42) ausgebildet ist (Fig. 2), wobei die Zugfeder (42) gegebenenfalls an der der zu dosierenden Flüssigkeit fernliegenden Oberfläche des Kolbens (38) angeordnet ist.

4. Vorrichtung nach einem der Ansprüche 1 bis 3, **dadurch gekennzeichnet, dass** zwischen dem Kolben (38) und der Zylinderwandung (28) am Kolben angebrachte Dichtungsringe (39) angeordnet sind.

5. Vorrichtung nach einem der Ansprüche 1 bis 3, **dadurch gekennzeichnet, daß** am Kolben (38) zumindest ein Volumenregler (36) vorgesehen ist.

6. Vorrichtung nach einem der Ansprüche 1 bis 5, **dadurch gekennzeichnet, dass** der Werkstoff des Kraftspeichers, also vor allem der Druckfeder (40) bzw. der Zugfeder (42), mit einem korrosionsfesten Überzug aus Kunststoff, insbesondere aus PVD, versehen ist.

7. Vorrichtung nach einem der Ansprüche 1 bis 6, **dadurch gekennzeichnet, dass** der Kraftspeicher, also vor allem die Druckfeder (40) bzw. die Zugfeder (42), aus nicht rostendem Stahl, insbesondere aus Edelstahl, geformt ist.

8. Vorrichtung nach einem der Ansprüche 1 bis 7, **dadurch gekennzeichnet, dass** zumindest zwei Ausgangsbehältern (12) jeweils wenigstens ein Dosierzylinder (24, 26) zugeordnet ist.

9. Vorrichtung nach einem der Ansprüche 1 bis 7, **dadurch gekennzeichnet, dass** zumindest zwei Ausgangsbehältern (12) jeweils wenigstens zwei Dosierzylinder (24, 26) unterschiedlichen Volumens zugeordnet sind (Fig. 3).

10. Vorrichtung nach einem der Ansprüche 1 bis 9, **dadurch gekennzeichnet, dass** das Dosiervolumen der/des Dosierzylinder/s (24, 26) 0,1 bis 5.000 cm³ misst, bevorzugt 1 bis 4.000 cm³.

11. Vorrichtung nach Anspruch 10, **gekennzeichnet durch** ein Dosiervolumen von 100 bis 2.000 cm³, vorzugsweise von 10 bis 1.000 cm³, oder **durch** ein Dosiervolumen von 1 bis 200 cm³, vorzugsweise von 10 bis 100 cm³, oder **durch** ein Dosiervolumen von 0,1 bis 20 cm³, vorzugsweise von 1 bis 10 cm³.

12. Vorrichtung nach einem der Ansprüche 1 bis 11, **dadurch gekennzeichnet, dass** den Dosierzylinder (24, 26) der Vorrichtung (10, 10ₐ) mit dem Ausgangsbehälter (12) eine Förderleitung (14) unter Zwischenschaltung eines Rückschlagventils (20) verbindet, von der eine Zweigleitung (18) mit Rückschlagventil (20ₐ) ausgeht, die andernends dem Aufnahmebehälter (22) zugeordnet ist.

13. Vorrichtung nach einem der Ansprüche 1 bis 12, **dadurch gekennzeichnet, dass** an der der Förderleitung (14) fernliegenden Stirnseite des Kolbens (38) der Vorrichtung (10, 10ₐ) in deren Dosierzylinder (24, 26) eine Durckleitung (44) mündet, die mit einem Strömungsmittel füllbar ist.

14. Vorrichtung nach einem der Ansprüche 1 bis 13, **dadurch gekennzeichnet, dass** sie zumindest einer weiteren Vorrichtung (10ₐ) zugeordnet ist und mit dieser eine Anlage (11) bildet, wobei die Druckleitungen (44) der Vorrichtungen (10, 10ₐ) zusammengeführt sind, sowie die Druckleitung jeder Vorrichtung durch eine Axialleitung (52) mit ihrer Zweigleitung (18) verbunden ist und die Axialleitung einen Dosierzylinder (26) enthält.

15. Vorrichtung nach Anspruch 14, **dadurch gekennzeichnet, dass** das Volumen des Dosierzylinders (26) der Axialleitung (52) geringer ist als das Volumen des der Förderleitung zugeordneten Dosierzylinders (24).
